# EUROPEAN PATENT SPECIFICATION

(11) **EP 4 257 546 B1**
(45) Date of publication and mention of the grant of the patent: **31.12.2025**
(21) Application number: 22461536.9
(22) Date of filing: 08.04.2022
(51) Int. Cl.: C01B 25/238

(54) **METHOD OF PURIFICATION PHOSPHORIC ACID FOR STATIC CRYSTALLIZATION TO OBTAIN ACID QUALITY SUITABLE FOR THE SEMICONDUCTOR INDUSTRY**
VERFAHREN ZUR REINIGUNG VON PHOSPHORSÄURE ZUR STATISCHEN KRISTALLISATION ZUM ERHALTEN VON FÜR DIE HALBLEITERINDUSTRIE GEEIGNETER SÄUREQUALITÄT
PROCÉDÉ DE PURIFICATION DE L'ACIDE PHOSPHORIQUE POUR LA CRISTALLISATION STATIQUE AFIN D'OBTENIR UNE QUALITÉ D'ACIDE ADAPTÉE À L'INDUSTRIE DES SEMI-CONDUCTEURS

(30) Priority: 04.04.2022 PL 44085222
(43) Date of publication of application: 11.10.2023
(73) Proprietor: "Alventa" Spolka Akcyjna, 32-566 Alwernia (PL)
(72) Inventor: Milde, Damian, 30-389 Kraków (PL); Ochman, Michal, 34-124 Klecza Górna (PL); Figura, Marcin, 31-589 Kraków (PL); Juszczyk, Edyta, 34-600 Limanowa (PL); Milde, Anna, 30-389 Kraków (PL)
(74) Representative: Czarnik, Maciej

(56) References cited:
- JP-A- 2009 114 064
- US-A- 4 804 526
- US-A1- 2006 073 088

## Description

The invention relates to a method of purification phosphoric(V) acid of the purity acceptable for use in static (fractional) crystallisation constituting a further step in preparing phosphoric acid for use in the electrical semiconductor industry, i.e. electronic grade (EG) acid, by removing impurities in the forms of antimony, arsenic and/or sulphur. The solution is associated with the field of industrial chemistry.

Phosphoric acid is produced either by acidifying phosphate rock with a mineral acid, usually sulphuric acid, or by reducing phosphate rock in an electric furnace with coke to release elemental phosphorus and burn phosphorus to produce phosphoric acid in a second step. Burning phosphorus converts it into P₂O₅, which in contact with water forms phosphoric acid. Electronic grade (EG) phosphoric acid for use in electrical semiconductors is usually produced by a process employing said furnace (thermal process) as it results in a much cleaner product, requiring less cleaning than acid obtained by acidification (wet process), to meet stringent requirements for acids applied in semiconductors. In practice, the acid for these applications must have a low content of dissolved metals, especially heavy metals, to avoid contamination of small electrical components such as etched silicon wafers used in computer memories and chips, and must be free of any discernible insoluble particles, including all particles larger than 0.5 microns to avoid the deposition of such insoluble substances which may result in undesirable bridging of adjacent electric lines on said silicon wafers.

As mentioned above, because of the general concentration of impurities, it is recommended to use thermal acid or the acid obtained from the combustion of elemental phosphorus for further processing to electronic grade. Thermal phosphoric acid has much lower amounts of ionic impurities compared to the extracted acid obtained using the so-called wet method - it is practically free from suspended solids, which greatly facilitates further processing. For the purposes of the present description, the solution according to the invention has been focused on the purification of thermal phosphoric acid. Contamination with arsenic and antimony in thermal phosphoric acid is variable and depends, among others, on the form and origin of elemental phosphorus, for arsenic the typical content is in the range of 40-70 ppm in technical grade phosphoric acid obtained by thermal method.

Phosphoric(V) acid is a chemical compound used in many branches of the economy. In recent years, one of the fastest growing branches of its application has been the electronics industry, where it is used in the processes of selective etching of semiconductor components. Because of the specific nature of the electronics industry, phosphoric acid (EG) must have a very low total content of impurities, in particular dissolved ionic impurities, the total concentration of which in the acid should not exceed 1 ppm. Due to the high degree of purification of the EG acid, according to the current technologies, one-stage process is not possible. The described solution according to the invention relates to a method of purifying technical grade phosphoric acid, most preferably obtained using the thermal method, to a purity that allows for electronic grade purity to be obtained after further processing, e.g. fractional crystallisation. The main contamination of phosphoric acid obtained by the thermal method, which makes it impossible to obtain EG grade directly according to the current standards, includes contamination with arsenic and antimony compounds (As, Sb). Antimony and arsenic, in contrast to typical contamination with metal ions, e.g. Fe, Ni, Al, are characterised by a very low degree of separation in the methods of EG acid production based on crystallisation, which prevents the direct use of such acid. Because of its amphoteric nature and variable oxidation state, antimony is particularly difficult to remove from phosphoric acid, the problem is so significant that even the current SEMI standards allow for several times higher antimony concentration compared to other elements. A typical method known in the art for the removal of arsenic compounds is the addition of a sodium sulphide (Na₂S) solution to technical grade acid. This method is characterised by the ease of application of technical solutions and a high degree of conversion, however, it introduces a significant amount of sodium ions at a ratio Na: S of 2:1 to the acid to be purified, which makes further processing of such acid to electronic grade economically unprofitable due to the large amount of by-products and low reaction yield.

The problems encountered in the production of phosphoric acid for electronic applications include the purification of the acid from antimony. For this purpose, phosphoric acid with a concentration of 75-85 wt.%. H₃PO₄ is typically treated with a sulphide, usually hydrogen sulphide, to precipitate heavy metal sulphide impurities such as arsenic, lead, mercury as well as cadmium in the form of their sulphide salts. Subsequently, the acid is hot filtered (at approximately 60-75°C) so that the viscosity of the acid is low enough to obtain a suitable filtration rate. Filtration removes heavy metal sulphides, leaving the hot acid free of unacceptable impurities. However, the solubility of antimony sulphide in phosphoric acid is temperature dependent. At 75°C it has a solubility of about 4 ppm and at 25°C it has a solubility of no more than approximately 1 ppm. Therefore, when the hot filtered acid is cooled down, the antimony sulphide particles clearly precipitate out of the solution because the solubility of this compound decreases as the temperature drops. Although the amount of precipitated antimony sulphide is small, in semiconductor applications such relatively large insoluble particles constitute a significant impurity and render the acid unsuitable for use in this field. The attempts to filter an acid containing both arsenic and antimony sulphide at lower temperatures are difficult and are not possible on an industrial scale because the significantly higher viscosity of the acid at such lower temperatures results in a too low filtration rate. Therefore, it is advantageous to separate the filtration into two stages.

There are prior art solutions that replace sodium sulphide with other reagents, the most preferred of which is the use of hydrogen sulphide gas (H₂S). The US patent US4804526 discloses a method of purifying phosphoric acid in which it is treated to remove and/or bind heavy metals and antimony in order to enable the use of this acid in electrical semiconductors. The disclosed method comprises reacting the acid to be purified with hydrogen sulphide and hydrogen peroxide in separate processing steps. Hydrogen sulphide precipitates metal sulphides, which are separated from the acid, and hydrogen peroxide oxidises the dissolved antimony so that it is bound and does not precipitate in the acid after metal sulphides are removed. In the method disclosed in this patent, additional reagents in the form of hydrogen peroxide were required to obtain an effective degree of purification for further processing into electronic grade acid.

The patent JP2009114064 A2 discloses a method for purifying phosphoric(V) acid to achieve high purity levels suitable for semiconductor applications. The process involves introducing excess hydrogen sulfide into crude phosphoric acid to precipitate impurity metals like antimony and arsenic as sulfides, followed by filtration and degassing steps to remove sulfide ions. The resulting phosphoric acid has an antimony content of 200 ppb or less and a sulfide ion content of 200 ppb or less, making it highly suitable for use in semiconductor etching and related industries. This purification method is particularly effective in ensuring the acid meets the stringent quality requirements for semiconductor fabrication processes.

Although in the prior art various methods of purifying phosphoric acid are known, new purification methods that would improve industrial processes for obtaining this acid by optimising the process parameters and improving the grade of the obtained acid by the reduction of the amount of arsenic, antimony other metal ions remaining after the process are still being sought.

For the purposes of this application, it should be assumed that the phrase "phosphoric(V) acid purified for production needs with a purity acceptable for use in electrical semiconductors" means that, in accordance with the standards applicable in the semiconductor industry, phosphoric(V) acid for such applications should contain minimum amounts of impurities, in particular should contain less than 1.5 ppm of antimony, less than 0.15 ppm of arsenic and less than 2 ppm of sulphur.

As a result of the conducted research, a new method of acid purification for the needs of the production of phosphoric(V) acid with a purity acceptable for use in electric semiconductors was developed. Unexpectedly, it turned out that thanks to the use of double filtration and double blowing of the filtrate using compressed air in the last stages of the purification process, high purity phosphoric(V) acid was obtained while maintaining the speed of the process acceptable in terms of implementation in industrial plants.

Therefore, the essence of the invention is a method of purification phosphoric(V) acid with a concentration of 73 wt.% to 88 wt.% for the purpose of static crystallisation to obtain an acid of the grade suitable for semiconductor industry, wherein the said phosphoric(V) acid is purified from antimony, arsenic and sulphur compounds, the process takes place in a plug flow reactor and includes the steps wherein:
a) said contaminated phosphoric(V) acid is mixed with hydrogen sulphide in an oxygen-free atmosphere, wherein the molar ratio of hydrogen sulphide to the total molar quantity of antimony and arsenic is 1.25-2.0, and the overpressure of the hydrogen sulphide introduced to phosphoric(V) acid is at least 1.0 bar,
b) the previously obtained suspension is buffered for 2-8 h,
c) then the suspension obtained in step b) is filtered to remove arsenic sulphide in a pressure plate filter with the addition of powdered activated carbon and diatomaceous earth,
d) the obtained filtrate is purged using compressed air with a capacity of 0.25-0.5 m³/h of air per 1 m³ of filtered phosphoric(V) acid for a minimum of 2 hours,
e) then the fresh antimony sulphide suspension obtained in step d) is filtered using a filter with a mesh size smaller than 50 µm, especially using a filter with a polymer cartridge,
f) the filtrate obtained in this way is purged to remove sulphur compounds as residual hydrogen sulphide using compressed air with a capacity of 0.25-0.5 m³/h of air per 1 m³ of filtered phosphoric(V) acid for a 4-8 hours.

The best results for the implementation of the phosphoric acid purification method according to the invention were obtained by carrying out this method in a plug flow reactor equipped with static mixers. Due to the use of a tubular reactor and running the process in coflow, a much lower molar excess of hydrogen sulphide can be used than in processes using a spray tower or only a tank reactor. Buffering takes place in a tank that enables the precipitate to coagulate and react more deeply with hydrogen sulphide. The acid with a concentration of less than 73 wt.% by can also be purified in the mentioned process, however at present the acid with a concentration of below 75 wt.%. has no commercial use. In the case of an acid with a concentration greater than 88 wt.%, the increasing viscosity which makes pumping and filtration difficult has a significant influence. Starting from the beginning of the installation, static mixers were installed approximately every 10 linear meters in the line of the tubular reactor. Hydrogen sulphide is introduced into the first static mixer in coflow with the phosphoric acid. The quantitative flow of hydrogen sulphide in relation to the flow of acid should be adjusted in such a way as to obtain from 1.25 to 2.50-fold stoichiometric excess of hydrogen sulphide to the determined total amount of As and Sb in the input acid.

Additionally, the pressure of the hydrogen sulphide gas introduced into the tubular reactor is important. It must be higher than the pressure generated by the acid feed pump and also higher than the hydraulic resistance present in the tubular reactor in order to start mixing the acid with the hydrogen sulphide with adequate turbulence as early as at the beginning of the reactor. The pressure of the introduced hydrogen sulphide should exceed the pressure in the tubular reactor by a value in the range of 1.0-3.5 bar.

After the filtration process, the acid is directed to a battery of tanks, where it is collected in a similar way as after the tubular reactor buffering step. The number and volume of tanks after the main filtration should correspond to the number and volume of tanks after the tubular reactor step, which ensures easy operation of the plant and high production flexibility. Tanks after filtration work in the atmospheric oxygen system, where the compressed air distribution system is located in the lower part of the tanks. As a result of air movement, self-mixing takes place, thanks to which the tanks do not require additional mixing. The pressure of the compressed air must enable the gas to flow freely to the bottom of the tank and through the height of the collected liquid. The volumetric flow should be from 1/4 to 1/2 of the volume of the tank, i.e. in the case of a 4 m³ tank, the air flow through the tank should be 1-2 m³/h.

The most effective solution is to buffer the acid in the tank in an atmospheric oxygen atmosphere for 2÷8 hours at a temperature of 45-55°C. Shorter time does not ensure a sufficient oxidation state of antimony compounds, while too long time does not translate into a real reduction in the content of this element in the product as a result of the equilibrium state in the tank. Such conditions ensure oxidation of the antimony compounds remained in the acid after filtration without the need to use additional reagents. The use of a lower temperature than in the oxygen-free process increases the amount of precipitated sulphide suspension, where its solubility decreases with a decrease in temperature, ensuring a deeper purification of the acid from antimony. In addition, it is also important that the aerated acid is free of primary contamination with arsenic sulphide precipitates, which are removed in the main filtration stage. The unfiltered acid, containing the sulphide suspension from the previous stage, could re-oxidise and dissolve the arsenic compounds, disturbing the purification process, for this it is important to separate them during the first filtration after completion of the oxygen-free stage.

A significant majority of the impurities are removed in the first stage of filtration, the amount of antimony sulphide suspension obtained in the atmospheric oxygen stage is relatively small, therefore it can be separated at a lower temperature on a small filter, e.g. a flow-through filter with a polymer fibre cartridge. The degree of filter filling can be assessed on the basis of the increase in filtration pressure under given flow conditions.

The last step in the process is the elimination of residual hydrogen sulphide. This process takes place to a large extent in atmospheric oxygen reactors with the flow of compressed air. In order to thoroughly eliminate hydrogen sulphide from the purged acid, the compressed air flow process should be carried out for an additional 4-8 hours over the time provided in atmospheric oxygen tanks. The residual gases can be collected by a collector and absorbed in a solution of sodium carbonate or hydroxide, resulting in sodium sulphide which is used in the production of phosphoric acid of a grade lower than EG.

Preferably, in the process according to the invention, the overpressure of the hydrogen sulphide introduced into the impure phosphoric(V) acid in step a) is 1.5-2.0 bar. An overpressure in the above range is sufficient to overcome the hydraulic resistance of the used reaction system and to ensure sufficient turbulence of the flow in the tubular reactor, and therefore to provide suitable conditions for mixing of the used reagents and effective precipitation of sulphide deposits at this stage. Too low overpressure will limit the effective dosing of the hydrogen sulphide gas into the tubular reactor. An excessively high overpressure does not have a positive effect on the course of the precipitation reaction, and may result in the necessity to use a more expensive highpressure reaction system.

It is also preferably that, in the process according to the invention, the buffering of the phosphoric(V) acid in step b) is carried out at a temperature of 50-75°C. It is effective to buffer the acid in the tank in an oxygen free atmosphere of hydrogen sulphide for 2÷8 hours, at a temperature in the range of 50-75°C. Such conditions ensure thorough reaction of arsenic compounds and precipitation of insoluble sulphides that can be separated during filtration. The best results were obtained with buffering at 60-70°C.

Preferably, in step c) of the process according to the invention, the suspension is filtered at a temperature of 60-70°C. At lower temperatures, the increasing viscosity of the acid reduces the filtration efficiency, while too high temperature increases the corrosive properties of phosphoric acid and may cause faster degradation of system components. The temperature of the acid below 60°C results in a significant decrease in the filtration rate.

Preferably, in step d) of the process according to the invention, the phosphoric(V) acid filtrate obtained in this way is purged using compressed air at a temperature of 45-55°C. Particularly preferably, at this stage the phosphoric(V) acid filtrate is purged using compressed air for no longer than 8 hours. In the case of the purge carried out over 8 hours, no further loss of antimony content in the production was found as a result of establishing the equilibrium state in the tanks.

The advantage of the method according to the invention is the use of only one active reagent - hydrogen sulphide and the division into an oxygen-free zone with the use of hydrogen sulphide gas - steps from a) to b) - and an atmospheric oxygen zone of compressed atmospheric air - steps from c) to f). Another advantage is that the disclosed process does not use the addition of reagents other than hydrogen sulphide gas and air. It is an oxygen-free process where technical phosphoric(V) acid, obtained in a thermal process and containing arsenic and antimony impurities, is brought into contact with hydrogen sulphide gas. Between the oxygen-free and atmospheric oxygen steps, there is the main node for filtration and separation of the acid from precipitated sulphides. The atmospheric oxygen stage is characterised by a lower temperature than the oxygen-free process. The reactors in which step d) of the process is performed are equipped with a lower compressed air distribution system, which automatically forces the mixing of the reaction solution in which antimony self-oxidation and the second precipitation which increases the degree of purification take place. After the atmospheric oxygen stage, the filtrate is transferred to an additional filtration node, where the antimony sulphide suspension is retained. The last step of the process f) is a buffer tank equipped with a lower compressed air distribution system, where the residual dissolved hydrogen sulphide is removed. After this step, the acid can be used for further processing to electronic grade purity, e.g. by fractional crystallisation.

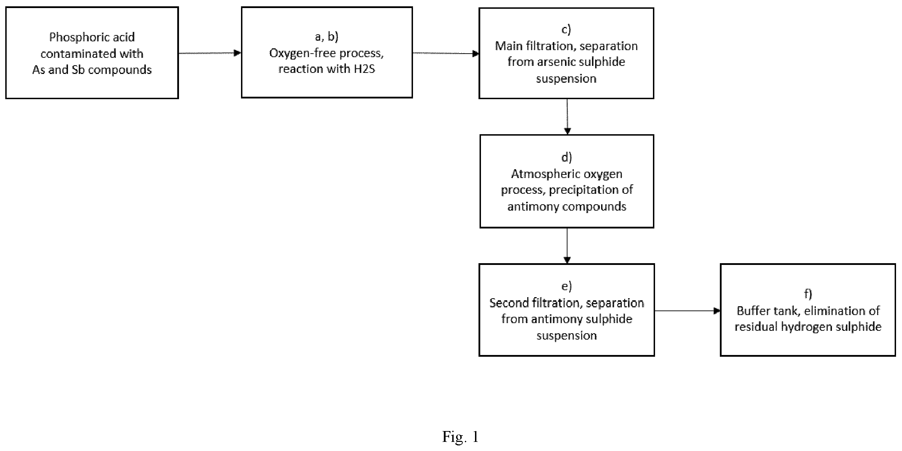

The method according to the invention is presented in the following embodiments and in the non-limiting drawing of the scope of the protection sought, in which Fig. 1 illustrates a schematic flow of the disclosed process.

### Example I

Phosphoric(V) acid with a concentration of 75 wt.%, temperature of 50°C, containing 44 ppm of As and 3.92 ppm of Sb was pumped into a tubular reactor equipped with static mixers. The pumping capacity of the acid was 0,45m³/h, and the pumping pressure was 1.0 bar. Subsequently, hydrogen sulphide gas was dispensed at the start of the tubular reactor in coflow, in an amount that would provide a 1.4-fold stoichiometric excess and with a dosing overpressure of 1.5 bar. After the tubular reactor, the acid was directed to two oxygen-free tanks, each with a capacity of 4 m³. These tanks work in an alternating system, so as to enable continuous collection of acid from the reactor and continuous operation of the plant. Prior to filtration, phosphoric acid was mixed and buffered in oxygen-free tanks for 4 hours. The main filtration was carried out with the use of a pressure plate filter with the addition of a filter aid - a mixture of powdered activated carbon and diatomaceous earth. After the main filtration, phosphoric acid was directed to two atmospheric oxygen tanks equipped with a bottom system flow of compressed air, each with a capacity of 4 m³. These tanks worked in an alternating system, so as to enable continuous collection of acid after the main filtration and continuous operation of the plant. The compressed air flow rate into the tank was 2 m³/h. Prior to the second filtration, phosphoric acid was buffered in atmospheric oxygen tanks, where mixing was automatically induced by the flow of gas in the liquid, for 4 hours. After the end of the atmospheric oxygen phase, the acid at 45°C was directed to the second filtration stage. Because of the small amount of suspension precipitated in the atmospheric oxygen stage, a 10-inch filter with a polymer cartridge with a mesh diameter of <50 µm was used for filtration. After the second filtration, the acid was cleaned of residual hydrogen sulphide by purging it using compressed air for 6 hours.

After the final acid purification as in Example 1, samples from the last tank were subjected to ICP-OES analysis to determine the grade of purity. The impurity content was: <0.1 ppm of arsenic, 0.9 ppm of antimony and <1.0 ppm of sulphur. An acid with these parameters is suitable for further purification by crystallisation to obtain an electronic grade (EG) product.

### Example IIA

Phosphoric(V) acid with a concentration of 85 wt.%, temperature of 65°C, containing 62 ppm of arsenic and 4.2 ppm of antimony was pumped into a tubular reactor equipped with static mixers. The pumping capacity of the acid was 0,50 m³/h, and the pumping pressure was 1.1 bar. Hydrogen sulphide gas was dispensed at the start of the tubular reactor in coflow, in an amount that would provide a 1.75-fold stoichiometric excess and with a dosing overpressure of 2.0 bar. The number of the applied tanks and their type was the same way as in Example 1. Prior to filtration, phosphoric acid was mixed and buffered in oxygen-free tanks for 4 hours at 65°C. The main filtration was carried out in the same way as in Example I. After the main filtration, phosphoric acid was directed to two atmospheric oxygen tanks equipped with a bottom system flow of compressed air, each with a capacity of 4 m³. These tanks worked in an alternating system, so as to enable continuous collection of acid after the main filtration and continuous operation of the plant. The compressed air flow rate into the tank was 1 m³/h. Prior to the second filtration, phosphoric acid was buffered in atmospheric oxygen tanks for 2 hours, mixing was automatically induced by the flow of gas in the liquid. After the end of the atmospheric oxygen phase, the acid at 50°C was directed to the second filtration stage. Because of the small amount of suspension precipitated in the atmospheric oxygen stage, a 10-inch filter with a polymer cartridge with a mesh diameter of <50 µm was used for filtration. After the second filtration, the acid was cleaned of residual hydrogen sulphide by purging it using compressed air for 4 hours.

After the final acid purification as in Example IIA, samples from the last tank were subjected to ICP-OES analysis to determine the grade of purity. The impurity content was: 0.11 ppm of arsenic, 1.2 ppm of antimony and 1.8 ppm of sulphur. An acid with these parameters is suitable for further purification by crystallisation to obtain an electronic grade (EG) product.

### Example IIB

Phosphoric(V) acid with a concentration of 85 wt.%, temperature of 60°C, containing 62 ppm of arsenic and 4.2 ppm of antimony was pumped into a tubular reactor equipped with static mixers. The pumping capacity of the acid was 0,52 m³/h, at a pumping pressure identical to that in Example IIA. Hydrogen sulphide gas was dispensed at the start of the tubular reactor in coflow, in an amount that would provide a 1.4-fold stoichiometric excess and with a dosing overpressure identical to that in Example IIA. The number of the applied tanks and their type was the same way as in Example IIA. Prior to filtration, phosphoric acid was mixed and buffered in oxygen-free tanks for 4 hours at 60°C. The compressed air flow rate to the atmospheric oxygen tanks was set at 2 m³/h. Prior to the second filtration, phosphoric acid was buffered in atmospheric oxygen tanks for 3 hours, mixing was automatically induced by the flow of gas in the liquid. After the end of the atmospheric oxygen phase, the acid at 45°C was directed to the second filtration stage. After the second filtration, the acid was cleaned of residual hydrogen sulphide by purging it using compressed air for 5 hours.

After the final acid purification as in the above Example (IIB), samples from the last tank were subjected to ICP-OES analysis to determine the grade of purity. The impurity content was: <0.1 ppm of arsenic, 1.2 ppm of antimony and <1.0 ppm of sulphur. An acid with these parameters is suitable for further purification by crystallisation to obtain an electronic grade (EG) product.

## Claims

1. A method of purification phosphoric(V) acid with a concentration of 73 wt.% to 88 wt.% for the purpose of static crystallisation to obtain an acid of the grade suitable for semiconductor industry, wherein the said phosphoric acid is purified from antimony, arsenic and sulphur compounds, the process includes the steps wherein:
a) said contaminated phosphoric(V) acid is mixed in a plug flow reactor with hydrogen sulphide in an oxygen-free atmosphere, wherein the molar ratio of hydrogen sulphide to the total molar quantity of antimony and arsenic is 1.25-2.0, and the overpressure of the hydrogen sulphide introduced to phosphoric(V) acid is at least 1.0 bar,
b) the previously obtained suspension is buffered for 2-8 h, wherein the buffering of phosphoric(V) acid in step b) is carried out at a temperature of 50-75°C, in particular 60-70°C,
c) then the suspension obtained in step b) is filtered to remove arsenic sulphide at a temperature of 60-70°C in a pressure plate filter with the addition of powdered activated carbon and diatomaceous earth,
d) the obtained filtrate is purged using compressed air with a capacity of 0.25-0.5 m³/h of air per 1 m³ of filtered phosphoric(V) acid for a minimum of 2 hours,
e) then the fresh antimony sulphide suspension obtained in step d) is filtered using a filter with a mesh size smaller than 50 µm, especially using a filter with a polymer cartridge,
f) the filtrate obtained in this way is purged to remove sulphur compounds as residual hydrogen sulphide using compressed air with a capacity of 0.25-0.5 m³/h of air per 1 m³ of filtered phosphoric(V) acid for a 4-8 hours.

2. The method of purification phosphoric(V) acid according to claim 1, **characterised in that** the overpressure of the hydrogen sulphide introduced into the impure phosphoric(V) acid in step a) is 1.5-2.0 bar.

3. The method of purification phosphoric(V) acid according to any one of claims 1 to 2, **characterised in that** in step d), the phosphoric acid filtrate is purged using compressed air at a temperature of 45-55°C.

4. The method of purification phosphoric(V) acid according to any one of claims 1 to 3, **characterised in that** in step d), the phosphoric(V) acid filtrate is purged using compressed air for no longer than 8 hours.

## Patentansprüche

1. Verfahren zur Reinigung von Phosphor(V)-Säure mit einer Konzentration von 73 Gew.-% bis 88 Gew.-% zum Zweck der statischen Kristallisation, um eine Säure der für die Halbleiterindustrie geeigneten Qualität zu erhalten, wobei die Phosphorsäure von Antimon, Arsen und Schwefelverbindungen gereinigt wird, wobei das Verfahren die folgenden Schritte umfasst:
a) die verunreinigte Phosphor(V)-Säure in einem Pfropfenströmungsreaktor mit Schwefelwasserstoff in einer sauerstofffreien Atmosphäre gemischt wird, wobei das molare Verhältnis von Schwefelwasserstoff zur gesamten molaren Menge von Antimon und Arsen 1,25-2,0 beträgt und der Überdruck des in die Phosphor(V)-Säure eingebrachten Schwefelwasserstoffs mindestens 1,0 bar beträgt,
b) die zuvor erhaltene Suspension 2-8 Stunden lang gepuffert wird, wobei die Pufferung der Phosphor(V)-Säure in Schritt b) bei einer Temperatur von 50-75 ⁰C, insbesondere 60-70 °C, durchgeführt wird,
c) dann wird die in Schritt b) erhaltene Suspension filtriert, um Arsensulfid bei einer Temperatur von 60-70 °C in einem Druckplattenfilter unter Zusatz von pulverisierter Aktivkohle und Kieselgur zu entfernen,
d) das erhaltene Filtrat wird mithilfe von Druckluft mit einer Kapazität von 0,25-0,5 m³/h Luft pro 1 m³ gefilterter Phosphor(V)-Säure mindestens 2 Stunden lang gespült,
e) dann wird die in Schritt d) erhaltene frische Antimonsulfidsuspension mit einem Filter mit einer Maschenweite von weniger als 50 pm gefiltert, insbesondere mit einem Filter mit einer Polymerpatrone,
f) das so erhaltene Filtrat wird zur Entfernung von Schwefelverbindungen als Restschwefelwasserstoff mit Druckluft mit einer Kapazität von 0,25-0,5 m³/h Luft pro 1 m³ gefilterter Phosphor(V)-Säure 4-8 Stunden lang gespült.

2. Verfahren zur Reinigung von Phosphor(V)-Säure nach Anspruch 1, **dadurch gekennzeichnet, dass** der Überdruck des in die unreine Phosphor(V)-Säure in Schritt a) eingebrachten Schwefelwasserstoffs 1,5-2,0 bar beträgt.

3. Verfahren zur Reinigung von Phosphor(V)-säure nach einem der Ansprüche 1 bis 2, **dadurch gekennzeichnet, dass** in Schritt d) das Phosphorsäurefiltrat mit Druckluft bei einer Temperatur von 45-55°C gespült wird.

4. Verfahren zur Reinigung von Phosphor(V)-Säure nach einem der Ansprüche 1 bis 3, **dadurch gekennzeichnet, dass** in Schritt d) das Phosphor(V)-Säurefiltrat nicht länger als 8 Stunden mit Druckluft gespült wird.

## Revendications

1. Procédé de purification de l'acide phosphorique(V) avec une concentration de 73 % en poids à 88 % en poids en vue d'une cristallisation statique pour obtenir un acide de qualité appropriée pour l'industrie des semi-conducteurs, dans lequel ledit acide phosphorique est purifié des composés d'antimoine, d'arsenic et de soufre, le procédé comprend les étapes dans lesquelles :
a) ledit acide phosphorique(V) contaminé est mélangé dans un réacteur à écoulement piston avec du sulfure d'hydrogène dans une atmosphère exempte d'oxygène, le rapport molaire du sulfure d'hydrogène à la quantité molaire totale d'antimoine et d'arsenic étant de 1,25 à 2,0, et la surpression du sulfure d'hydrogène introduit dans l'acide phosphorique(V) étant d'au moins 1,0 bar,
b) la suspension obtenue précédemment est tamponnée pendant 2 à 8 heures, le tamponnage de l'acide phosphorique(V) à l'étape b) étant effectué à une température de 50 à 75 °C, en particulier 60 à 70⁰C,
c) la suspension obtenue à l'étape b) est filtrée pour éliminer le sulfure d'arsenic à une température de 60-70 ⁰C dans un filtre à plaque sous pression avec addition de charbon actif en poudre et de terre de diatomée,
d) le filtrat obtenu est purgé à l'aide d'air comprimé avec une capacité de 0,25-0,5 m³/h d'air par 1 m³ d'acide phosphorique(V) filtré pendant un minimum de 2 heures,
e) la suspension fraîche de sulfure d'antimoine obtenue à l'étape d) est ensuite filtrée à l'aide d'un filtre dont la taille des mailles est inférieure à 50 pm, en particulier à l'aide d'un filtre à cartouche polymère,
f) le filtrat ainsi obtenu est purgé pour éliminer les composés sulfurés sous forme de sulfure d'hydrogène résiduel en utilisant de l'air comprimé à raison de 0,25-0,5 m³/h d'air pour 1 m³ d'acide phosphorique(V) filtré pendant 4 à 8 heures.

2. Méthode de purification de l'acide phosphorique(V) selon la revendication 1, **caractérisée par le fait que** la surpression du sulfure d'hydrogène introduit dans l'acide phosphorique(V) impur à l'étape a) est de 1,5-2,0 bar.

3. Procédé de purification de l'acide phosphorique(V) selon l'une quelconque des revendications 1 à 2, **caractérisé par le fait qu'**à l'étape d), le filtrat d'acide phosphorique est purgé à l'aide d'air comprimé à une température de 45-55 °C.

4. Procédé de purification de l'acide phosphorique(V) selon l'une quelconque des revendications 1 à 3, **caractérisé par le fait qu'**à l'étape d), le filtrat d'acide phosphorique(V) est purgé à l'aide d'air comprimé pendant une durée n'excédant pas 8 heures.
